# EUROPÄISCHE PATENTSCHRIFT

(11) **EP 4 010 667 B1**
(45) Veröffentlichungstag und Bekanntmachung des Hinweises auf die Patenterteilung: **05.06.2024**
(21) Anmeldenummer: 20763984.0
(22) Anmeldetag: 05.08.2020
(51) Int. Cl.: G01J 3/02, G01J 3/50

(54) **BILDGEBENDE LICHTMESSVORRICHTUNG**
IMAGING LIGHT MEASURING DEVICE
DISPOSITIF DE MESURE DE LUMIÈRE D'IMAGERIE

(30) Priorität: 06.08.2019 DE 102019121173
(43) Veröffentlichungstag der Anmeldung: 15.06.2022
(73) Patentinhaber: Instrument Systems GmbH, 81677 München (DE)
(72) Erfinder: SCHANZ, Roland, 80939 München (DE); LOPES, Miguel, 80939 München (DE)
(74) Vertreter: Schneiders & Behrendt Bochum
(86) Internationale Anmeldenummer: PCT/EP2020/071986
(87) Internationale Veröffentlichungsnummer: WO 2021/023769

(56) Entgegenhaltungen:
- CN-A- 104 596 768
- CN-A- 106 805 944
- CN-A- 107 931 784
- JP-A- H01 101 963
- US-A1- 2014 192 209

## Beschreibung

Die Erfindung betrifft eine bildgebende Lichtmessvorrichtung mit einem Bildsensor und einem optischen Spektrometer, wobei der Bildsensor und das Spektrometer von einem Messobjekt emittiertes Licht empfangen, und mit einer Datenverarbeitungseinheit, die mit dem Bildsensor und dem Spektrometer verbunden ist und die von dem Bildsensor und dem optischen Spektrometer ausgegebenen Messsignale verarbeitet.

Derartige Vorrichtungen sind aus dem Stand der Technik bekannt. So beschreibt zum Beispiel die EP 3 054 273 A1 ein Farbmesssystem, das zum Vermessen und Überprüfen von Matrix-Anzeigeeinrichtungen (auch als Matrixdisplays bezeichnet, wie z.B. Farbmatrixdisplays von Smartphones, Tablets, Laptops, Monitoren, Fernsehern usw.) in der Qualitätssicherung dient.

Schlüsselkomponenten bekannter Display-Testumgebungen sind Lichtmessvorrichtungen in Form von bildgebenden Kolorimetern, die eine genaue Messung der visuellen Leistung des individuellen Displays, die der menschlichen Wahrnehmung von Helligkeit, Farbe und räumlichen Beziehungen entspricht, ermöglichen. Leistungsstarke bildgebende Lichtmessgeräte können z.B. die Farbe (d.h. die Farbkoordinaten in einem geeigneten Farbraum), die Leuchtdichte (Helligkeit) einzelner Pixel des Displays sowie die allgemeine Gleichmäßigkeit der Anzeige genau messen.

In einem typischen Herstellungsprozess wird die visuelle Leistung jedes Displays durch automatisierte Inspektionssysteme mit solchen bildgebenden Lichtmessgeräten getestet. Das hat mehrere Vorteile. Eine quantitative Bewertung von Display-Fehlern ist möglich, ebenso eine erhöhte Testgeschwindigkeit und vor allem eine gleichzeitige Bewertung der vollen Displayqualität, d.h. Gleichmäßigkeit und Farbgenauigkeit.

Bei dem bekannten bildgebenden Farbmesssystem ist eine digitale RGB-Kamera als Bildsensor vorgesehen, die das von den Pixeln des Displays emittierte Licht empfängt. Auf diese Weise wird die Farb- und Leuchtdichteverteilung mit räumlicher Auflösung, d.h. bildgebend, auf einfache Weise gemessen. Darüber hinaus umfasst das bekannte Farbmesssystem ein optisches Spektrometer, das das Licht von einem vorgegebenen Bereich ("Spot") auf dem Display ohne räumliche Auflösung, d.h. nicht bildgebend, empfängt. Zwischen dem Messobjekt und dem Bildsensor bzw. dem Spektrometer befindet sich ein Strahlteiler, der das von dem Messobjekt kommende Licht zur Erfassung mittels des Bildsensors und des Spektrometers aufteilt. Das bekannte Farbmesssystem umfasst eine mit dem Bildsensor und dem Spektrometer in Datenverbindung stehende Datenverarbeitungseinheit, die den Messvorgang steuert und die von dem Bildsensor und dem Spektrometer ausgegebenen Messsignale verarbeitet. Dabei werden die RGB-Messsignale des Bildsensors in geeignete farb-, radio- und photometrische Größen (z.B. in X-, Y-, Z-Farbkoordinaten) konvertiert, und die erhaltenen, bildgebend erfassten Größen werden basierend auf den präzisen Messsignalen des Spektrometers korrigiert, so dass eine sehr schnelle und kosteneffiziente bildgebende Erfassung der zur Beurteilung der Displayqualität erforderlichen farb- und photometrischen Größen möglich ist.

In modernen automatisierten Inspektionssystemen soll die Verweilzeit des einzelnen Messobjektes in der Messvorrichtung minimal sein, um den Durchsatz zu maximieren.

Moderne Matrixanzeigen auf Basis von Mikro-LED-Arrays stehen kurz vor der Marktreife. Bei der Vermessung von LEDs tritt das Problem auf, dass die LEDs sich im Betrieb aufheizen. Die Temperaturänderung führt zu einer Veränderung des Spektrums des emittierten Lichts. Von daher wird angestrebt, beim Testen von LEDs enthaltenden Messobjekten die einzelnen LEDs jeweils nur über ein sehr kurzes Zeitintervall von wenigen Millisekunden anzuschalten.

Um dies zu ermöglichen, muss der Zeitablauf der einzelnen Messung präzise kontrollierbar sein.

Bei der bekannten Lichtmessvorrichtung steuert die Software der Datenverarbeitungseinheit den gesamten Messvorgang. Dabei ist die Befehlslaufzeit unbestimmt und variiert von Messung zu Messung, so dass es Messunsicherheiten im Bereich von 100 ms oder mehr geben kann. Daraus resultierend muss mit einer Messdauer gearbeitet werden, die die Dauer des eigentlichen Messvorgangs des Bildsensors bzw. des Spektrometers, die nur wenige Millisekunden beträgt, um ein Vielfaches übersteigt. Nur so kann sichergestellt werden, dass die Messung tatsächlich innerhalb des zur Verfügung stehenden Zeitfensters stattfindet. Erschwerend kommt hinzu, dass die Messungen des Bildsensors und des Spektrometers aufgrund der Softwaresteuerung nicht präzise gleichzeitig ablaufen. Aufgrund der unterschiedlichen und variierenden Befehlslaufzeiten ist nicht genau bekannt, in welchem zeitlichen Abstand die Messungen tatsächlich stattfinden. Auch hier beträgt die Unsicherheit bis zu 100 ms. Es resultiert das Problem, dass bei der Vermessung von LED-basierten Messobjekten, wie zuvor erwähnt, nach dem Einschalten mit einem spektralen Einlaufverhalten zu rechnen ist, so dass z.B. der Bildsensor noch die kalten LEDs misst, während das Spektrometer, viele Millisekunden später, das bereits rotverschobene Spektrum der selben LEDs misst. Die Daten des Bildsensors und des Spektrometers passen dann nicht zusammen.

Die CN 107931784 A beschreibt eine Messvorrichtung zur Lichtbogen-Messung einer Lichtbogenschweißvorrichtung, bei welcher das Spektrometer und der bildgebende Sensor über die Datenverarbeitungseinheit angesteuert werden. Weiterer Stand der Technik wird in CN104596768 A, CN106805944 A, JPH01 101963 A und US2014/192209 A1 offenbart.

Vor diesem Hintergrund ist es Aufgabe der Erfindung, eine Lichtmessvorrichtung bereit zu stellen, die auf einfache und kostengünstige Weise eine präzise Zeitsteuerung des Messvorgangs ermöglicht.

Diese Aufgabe löst die Erfindung ausgehend von einer Lichtmessvorrichtung der eingangs angegebenen Art dadurch, dass der Bildsensor und das Spektrometer jeweils einen Triggereingang aufweisen, wobei ein an dem Triggereingang anliegendes Triggersignal einen Messvorgang auslöst.

Es ist zum Zwecke der Klarstellung darauf hinzuweisen, dass das Messobjekt nicht Bestandteil der erfindungsgemäßen Lichtmessvorrichtung ist.

Gemäß der Erfindung werden Bildsensor und Spektrometer hinsichtlich des Auslösens des Messvorgangs also nicht, wie bisher, von der Software der Datenverarbeitungseinheit gesteuert, sondern per externem Triggersignal. "Extern" bedeutet dabei, dass das Triggersignal von außerhalb der Lichtmessvorrichtung, d.h. insbesondere von außerhalb der Datenverarbeitungseinheit kommt, d.h. die Datenverarbeitungseinheit ist in die Messauslösung nicht involviert. Der Triggereingang ist direkt an die Hardware, d.h. an die Elektronik des Bildsensors bzw. des Spektrometers angebunden. Das Triggersignal kann über eine einfache elektrische Signalleitung als Spannungssignal mit digitalem Logikpegel übertragen werden. Auf diese Weise ergibt sich eine denkbar instantane Auslösung des Messvorgangs, die nur durch die elektrische bzw. elektronische Signallaufzeit des Triggersignals limitiert ist. Denkbar ist es auch, das Triggersignal über einen geeigneten Datenbus zuzuführen, der von der Datenverarbeitungseinheit unabhängig ist.

Die Erfindung erlaubt es, die Messung von Bildsensor und Spektrometer tatsächlich zeitgleich, oder zumindest quasi zeitgleich durch das Triggersignal auszulösen. Dadurch kann zum einen sichergestellt werden, dass die Messung präzise zum gewünschten Zeitpunkt ausgelöst wird, wobei insbesondere die tatsächlich gleichzeitige Messung per Bildsensor und Spektrometer sichergestellt ist. Die aus dem Zeitversatz bei LED-basierten Messobjekten resultierenden Probleme werden dadurch vermieden. Zum anderen kann die Messdauer der Aktivierungsdauer des Messobjektes, bei dem es sich, wie oben ausgeführt, typischerweise um eine Matrixanzeige oder ein LED-Array handelt, angepasst werden. Das Messfenster und damit die Verweilzeit des Messobjektes können so verkürzt werden. Das Messobjekt kann unmittelbar nach Ende der (bekannten) Messdauer von Bildsensor und Spektrometer ausgetauscht werden. Dadurch erhöht sich der Durchsatz erheblich.

Weiter kann das Triggersignal jeweils eine Integrationszeit des Bildsensors und/oder des Spektrometers steuern. Z.B. können Bildsensor und/oder Spektrometer die Messung durchführen, solange das Triggersignal einen Logikpegel "high" hat. Damit kann eine Integration zur Reduktion von Signalrauschen realisiert werden. Außerdem kann auf diese Weise z.B. die Messung des Bildsensors andauern, während sequenziell Lichtquellen (z.B. einzelne LED-Gruppen) des Messobjektes aktiviert werden. Das von dem Bildsensor erzeugte Abbild des Messobjektes zeigt dann gleichzeitig sämtliche LED-Gruppen im aktivierten Zustand. Parallel mit der sequenziellen Aktivierung der LED-Gruppen können per entsprechend synchronisiert sequenzieller Triggersignale mehrere Einzelmessungen des Spektrometers ausgelöst werden. Aus den Messsignalen des Spektrometers kann dann eine individuelle Korrektur der Messsignale des Bildsensors für jede LED-Gruppe abgeleitet werden. Der gesamte Messvorgang kann in dieser Weise mit minimaler Messzeit durchgeführt werden.

Erfindungsgemäß weisen der Bildsensor und/oder das Spektrometer jeweils mindestens einen Signalausgang auf und sind dazu eingerichtet, über den Signalausgang ein von ihrem Betriebszustand abhängiges Signal auszugeben. Der Signalausgang stellt einen zu dem Triggereingang korrespondierenden externen Rückmeldungskanal dar. Extern bedeutet dabei wiederum, dass der Signalausgang von der Datenverarbeitungseinheit unabhängig ist und direkt an die Elektronik des Bildsensors bzw. des Spektrometers angebunden ist.

Z.B. können der Bildsensor und/oder das Spektrometer jeweils dazu eingerichtet sein, nach Empfang des Triggersignals ein Signal über den Signalausgang auszugeben. In diesem Fall dient der Signalausgang dazu, ein Signal zur Bestätigung des Empfangs des Triggersignals z.B. an eine externe Steuerung der automationstechnisch eingebundenen Lichtmessvorrichung zu übermitteln. Dadurch ist extern erkennbar, dass tatsächlich ein Messvorgang ausgelöst wurde.

Weiter können der Bildsensor und/oder das Spektrometer jeweils dazu eingerichtet sein, während des laufenden Messvorgangs ein Signal über den Signalausgang auszugeben. Dadurch wird für die externe Steuerung erkennbar, dass die Messung läuft. Besonders vorteilhaft sind der Bildsensor und/oder das Spektrometer jeweils dazu eingerichtet, nach Abschluss des Messvorgangs und dabei vorzugsweise noch vor Abschluss der Ausgabe der Messsignale an die Datenverarbeitungseinheit, jedenfalls aber vor Abschluss der Verarbeitung der Messsignale durch die Datenverarbeitungseinheit, ein Signal über den Signalausgang auszugeben. Nach Beendigung der Messung von Bildsensor und Spektrometer bzw. nach Beendigung eines vollständigen Messprogramms kann das Messobjekt gewechselt werden, insbesondere ohne dass abgewartet werden muss, bis seitens der Datenverarbeitungseinheit die Übertragung, Speicherung und Auswertung der Messsignale von Bildsensor und Spektrometer abgeschlossen sind. Dadurch kann die Verweildauer minimiert werden, ohne dass die Gefahr eine fehlerhaften oder unvollständigen Messung aufgrund z.B. eines vorzeitigen Wechsels des Messobjektes besteht. Die Dauer der Verarbeitung der Messsignale durch die Datenverarbeitungseinheit kann für den Wechsel des Messobjektes genutzt werden, so dass keine unproduktive Wartezeit entsteht.

Eine weitere Möglichkeit besteht darin, dass der Bildsensor und/oder das Spektrometer jeweils dazu eingerichtet sind, bei Bereitschaft zur Messung ein Signal über den Signalausgang auszugeben. Dadurch wird für eine externe Steuerung erkennbar, wann ein neuer Messvorgang gestartet werden kann. Dies trägt weiter zur Minimierung der Verweildauer des Messobjektes an der Lichtmessvorrichtung bei. Die Messung kann unmittelbar gestartet werden, wenn die Hardware dazu bereit ist, ohne Sicherheitsspielräume aufgrund der unbestimmten und variierende Signallaufzeiten der Datenverarbeitungseinheit berücksichtigen zu müssen.

Bei einer möglichen Ausgestaltung ist bei dem Bildsensor und/oder dem Spektrometer für jedes von wenigstens zwei der zuvor beschriebenen Signale (Triggerbestätigung, Messung läuft, Messung beendet, bereit zur Messung) jeweils ein eigener Signalausgang vorgesehen. Auf diese Weise kann jedes Rückkopplungssignal als einfaches elektrisches Signal übermittelt werden. Die Übertragung über einen (von der Datenverarbeitungseinheit unabhängigen) Datenbus ist ebenfalls denkbar.

Bei der erfindungsgemäßen Lichtmessvorrichtung ist eine von der Datenverarbeitungseinheit unabhängige Steuereinheit vorgesehen sein, die mit den Triggereingängen des Bildsensors und des Spektrometers verbunden ist. Die externe Steuereinheit dient gleichsam als Schnittstelle zur Ansteuerung der Lichtmessvorrichtung in einem automationstechnischen System, z.B. in der industriellen Massenfertigung von Matrixdisplays. Die Ansteuerung erfolgt dabei vollständig auf elektrischer/elektronischer Ebene, d.h. ohne Einbindung der Datenverarbeitungseinheit.

Die Steuereinheit ist auch mit den Signalausgängen des Bildsensors und des Spektrometers verbunden, wobei die Steuereinheit dazu eingerichtet ist, den Bildsensor und das Spektrometer über die Triggereingänge anzusteuern, und zwar in Abhängigkeit von den über die Signalausgänge des Bildsensors und des Spektrometers ausgegebenen Signalen. Z.B. per Logikverknüpfung kann die Auslösung einer synchronen Messung per Bildsensor und Spektrometer davon abhängig gemacht werden, dass sowohl Bildsensor und Spektrometer über ihre jeweiligen Signalausgänge ihre Messbereitschaft anzeigen. Ebenso kann die Steuereinheit die Signalausgänge, über die jeweils der Abschluss einer Messung des Bildsensors und des Spektrometers angezeigt wird, logisch miteinander verknüpfen, so dass von der externen Automationstechnik der Wechsel des Messobjektes initiiert wird, sobald beide Modalitäten, d.h. Bildsensor und Spektrometer, ihre Messung abgeschlossen haben.

Bei einer weiter bevorzugten Ausgestaltung kann die Steuereinheit dazu eingerichtet sein, wenigstens ein Peripherieelement der Lichtmessvorrichtung anzusteuern, wobei das Peripherieelement z.B. aus der Gruppe
- Strahlablenkungsmittel zur Ablenkung des von dem Messobjekt emittierten Lichts auf den Bildsensor oder das Spektrometer,
- optisches Filterrad, das dem Bildsensor oder dem Spektrometer vorgeschaltet ist,
- Polarisator, der dem Bildsensor oder dem Spektrometer vorgeschaltet ist, oder
- Positionierungseinrichtung zur Positionierung des Messobjektes relativ zum Bildsensor und zum Spektrometer ist. Die Steuereinheit kann zweckmäßig dazu verwendet werden, optionale Peripherie der Lichtmessvorrichtung zu steuern. Statt eines Strahlteilers (wie im Stand der Technik) kann ein Strahlablenkungsmittel (z.B. ein per Aktor in den Strahlengang einfahrbarer Spiegel) vorgesehen sein, um das vom Messobjekt kommende Licht wahlweise auf den Bildsensor oder das Spektrometer zu lenken. Die Steuereinheit steuert dann die Messsequenz, um nacheinander eine Messung per Bildsensor und eine Messung per Spektrometer durchzuführen, wobei zwischen den beiden Messungen das Strahlablenkungsmittel angesteuert wird. Ein optisches Filterrad kann vorgesehen sein, z.B. bei einem bildgebenden Filterrad-Kolorimeter als Bildsensor. Auch dieses kann die Steuereinheit ansteuern, um die sequenziellen Messungen mit entsprechender Filterung nacheinander auszulösen. Auch ein sog. Pixelshift kann per Strahlablenkungsmittel (z.B. in Form einer im Strahlengang drehbaren Glasplatte) realisiert werden, insbesondere um Moiré-Muster bei der Messung per Bildsensor zu vermeiden. Weitere Beispiele für Peripherieelemente sind ein Polarisationsfilter im Strahlengang oder eine Positioniereinrichtung (z.B. ein-, zwei- oder drei-Achsen Positioniersystem), um das Messobjekt präzise zu Bildsensor und/oder Spektrometer auszurichten. Bei der Vermessung von Matrixdisplays ist die genaue Positionierung wichtig, um die korrekte Ausrichtung des Abbildes der Displaymatrix auf der Sensormatrix des Bildsensors sicherzustellen.

Des Weiteren kann die Steuereinheit zweckmäßig dazu verwendet werden, eine Wechseleinrichtung zum automatisierten Wechseln des Messobjektes anzusteuern. Auf diese Weise wird die Steuereinheit weiter in das automationstechnische Umfeld der erfindungsgemäßen Lichtmessvorrichtung eingebunden. Die Steuereinheit kann vorteilhaft den Wechsel des Messobjektes mit der Durchführung der Messung unmittelbar koordinieren und synchronisieren. Auf diese Weise wird eine Minimierung der Verweilzeit des Messobjektes herbeigeführt. Zweckmäßig steuert die Steuereinheit dabei auch von dem Messobjekt umfasste elektrische Lichtquellen, wie z.B. LED-Arrays als Bestandteil eines Displays oder auf einem Wafer, an. Auf diese Weise kann die Aktivierung der lichtemittierenden Elemente des Messobjektes mit dem Messvorgang optimal synchronisiert werden.

Bevorzugt ist die Datenverarbeitungseinheit dazu eingerichtet, aus den von dem Bildsensor und dem Spektrometer ausgegebenen Messsignalen radio- und/oder photometrische Größen, z.B. Strahlungsleistung, Strahlstärke, Bestrahlungsstärke, Strahldichte oder Farbkoordinaten, abzuleiten, vorzugsweise bildgebend, d.h. mit Zuordnung von Werten der radio- und/oder photometrischen Größen zu den verschiedenen von dem Bildsensor erfassten Positionen auf dem Messobjekt.

Ein Ausführungsbeispiel der Erfindung wird im Folgenden anhand der Zeichnung näher erläutert. Es zeigt:

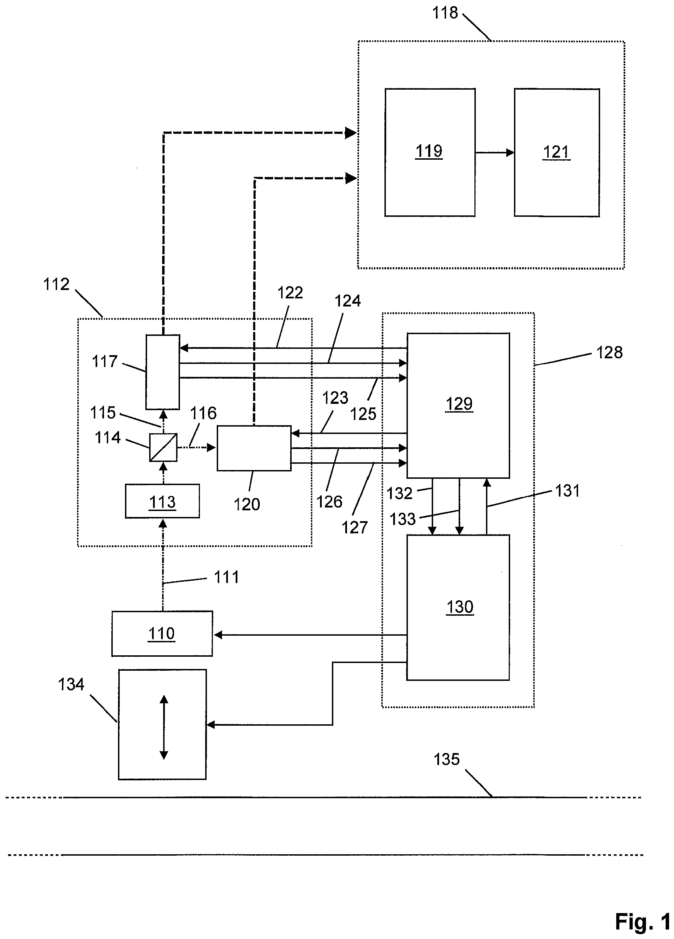

- Figur 1:: schematische Ansicht einer erfindungsgemäßen Lichtmessvorrichtung, eingebunden in eine Herstellungslinie von Matrixdisplays, als Blockdiagramm.

In Figur 1 ist ein Messobjekt (z.B. eine Mikro-LED-Matrixanzeige), das auf Farbigkeit, Leuchtdichte und Gleichmäßigkeit zu prüfen ist, mit 110 bezeichnet. Das von dem Messobjekt 110 emittierte Licht 111 wird auf eine bildgebende Farbmessvorrichtung 112 gerichtet. Das Licht 111 passiert eine Anordnung 113 von optischen Elementen (Linsen/Blenden) und einen Strahlteiler 114. Der Strahlteiler 114 teilt das Licht 111 in einen ersten Teilstrahl 115 und einen zweiten Teilstrahl 116 auf.

Eine RGB-Kamera 117 als Bildsensor empfängt den ersten Teilstrahl 115, so dass ein zweidimensionales Bild des Messobjektes 110 in einer Bildebene auf einer Sensoranordnung (z.B. einem CCD-Sensor) der RGB-Kamera 117 erzeugt wird. Das resultierende (digitale) Kamerabild bildet eine zweidimensionale Matrix von RGB-Farbwerten, die jeder Position auf dem Messobjekt 110 einen Satz von RGB-Farbwerten zuordnet.

Die Matrix der RGB-Farbwerte wird als digitales Messsignal an eine Datenverarbeitungseinheit 118 übermittelt, die einen Prozessor 119 umfasst, der die RGB-Farbwerte in XYZ-Farbkoordinaten umwandelt, sodass jeder Position auf dem Messobjekt 110 ein Satz von XYZ-Farbkoordinaten zugeordnet wird.

Der zweite Teilstrahl 116 wird auf ein optisches Spektrometer 120 gerichtet. Unter einem Spektrometer im Sinne der Erfindung wird im allgemeinsten Sinne ein Gerät zur Erfassung eines Spektrums, d.h. der Wellenlängenabhängigkeit der Intensität von Licht verstanden. Unter diese Definition fällt ein spektral hochauflösendes Spektrometer, z.B. mit Czerny-Turner-Aufbau mit dispersiver Spektralaufspaltung und CCD-Sensor, aber auch ein einfaches, kompaktes und kostengünstiges photoelektrisches Drei-Filter-Kolorimeter bekannten Typs, bei dem die spektrale Auflösung entsprechend den (sich sogar zum Teil spektral überlappenden) Filtercharakteristiken der verwendeten X-, Y-, Z-Filter gering ist. Das Spektrometer 120 erzeugt ebenfalls XYZ-Farbkoordinaten, allerdings nicht in Form eines Abbildes, wie der Bildsensor 117, sondern ohne räumliche Auflösung. Der zweite Teilstrahl 116 wird von einer Reihe von Positionen innerhalb eines Bereichs ("Spot") auf dem Messobjekt 110 emittiert. Über die Fläche des Spots erfolgt bei der Messung des Spektrometers 120 insofern eine Mittelung.

Die XYZ-Farbkoordinaten des Spektrometers 120 werden ebenfalls als digitales Messsignal an die Datenverarbeitungseinheit 118 übermittelt. Im Falle des hochauflösenden Spektrometers 120 kann dieses alternativ direkt das gemessene optische Spektrum (Lichtintensität als Funktion der Wellenlänge) an die Datenverarbeitungseinheit 118 übermitteln. Diese berechnet dann die XYZ-Farbkoordinaten durch Integration über das Spektrum unter Wichtung mit den in der Datenverarbeitungseinheit 118 hinterlegten Tristimuluskurven gemäß CIE-Normsystem. Der Prozessor 119 leitet eine Korrektur ab, indem er die XYZ-Farbkoordinaten, die per Spektrometer 120 ermittelt wurden, mit einer Teilmenge der aus den RGB-Werten des Bildsensors 117 ermittelten XYZ-Farbkoordinaten vergleicht, die den Positionen innerhalb des Spots zugeordnet sind, von dem aus der zweite Teilstrahl 116 emittiert wird. Der Prozessor 119 wendet dann die Korrektur auf den gesamten Satz von aus den RGB-Werten erzeugten XYZ-Farbkoordinaten an, um auf diese Weise ein vollständiges und präzises Abbild der XYZ-Koordinaten des von dem Messobjekt abgestrahlten Lichts zu erhalten.

Die Ergebnisse dieser Berechnungen werden schließlich über eine Anzeigevorrichtung 121 ausgegeben, um die Farbgleichmäßigkeit sowie verschiedene Arten von Artefakten (Linienfehler, Pixelfehler, Black Mura, Yellow Mura usw.) zu beurteilen. Solche Artefakte können auch automatisiert durch eine entsprechende Bildverarbeitungssoftware des Prozessors 119 erkannt werden. Über die Anzeigevorrichtung 121 kann ein Signal ausgegeben werden, falls das untersuchte Messobjekt die entsprechenden Qualitätsvorgaben nicht erfüllt.

Gemäß der Erfindung weisen die RGB-Kamera 117 und das Spektrometer 120 jeweils einen Triggereingang auf, angedeutet durch die Pfeile 122 bzw. 123. Ein an dem Triggereingang 122, 123 anliegendes elektrisches Triggersignal (z.B. Low/High-Flanke eines Logiksignals) löst jeweils einen Messvorgang aus. Die Triggereingänge 122, 123 sind direkt an die Hardware, d.h. an die Elektronik der RGB-Kamera 117 bzw. des Spektrometers 120 angebunden.

Weiter weisen die RGB-Kamera 117 und das Spektrometer 120 jeweils zwei Signalausgänge, angedeutet durch die Pfeile 124, 125 bzw. 126, 127, auf. Über den Signalausgang 124 bzw. 126 geben RGB-Kamera 117 und Spektrometer 120 ein Signal aus, das anzeigt, dass der jeweilige Messvorgang beendet ist. Über den Signalausgang 125 bzw. 127 wird ein Signal ausgegeben, dass die RGB-Kamera 117 bzw. das Spektrometer 120 (nach vollständiger Übertragung der Messsignale an die Datenverarbeitungseinheit 118 nach dem vorangegangenen Messvorgang) dazu bereit sind, die nächste Messung zu starten.

Eine Steuereinheit 128 ist mit den Triggereingängen 122, 123 und den Signalausgängen 124-127 verbunden ist. Die Steuereinheit 128 ist aus zwei Untereinheiten 129, 130 zusammengesetzt, von denen die Untereinheit 129 der Lichtmessvorrichtung selbst und die Untereinheit 130 einer externen Automationstechnik zugeordnet ist. Die Untereinheit 129 dient als Schnittstelle zur Ansteuerung der Lichtmessvorrichtung in einem übergeordneten automationstechnischen System, z.B. in der industriellen Massenfertigung von Matrixdisplays. Die Untereinheit 129 empfängt ihrerseits von der Untereinheit 130 ein Eingangssignal 131, durch welches eine gleichzeitige Messung per RGB-Kamera 117 und Spektrometer 120 ausgelöst wird. Auf das Eingangssignal 131 hin gibt die Untereinheit 129 gleichzeitig Triggersignale an die Triggereingänge 122, 123 aus. Die Untereinheit 129 führt eine logische Verknüpfung der Signalausgänge 124-127 in der Weise durch, dass ein erstes Ausgangssignal 132 erzeugt wird, wenn sowohl RGB-Kamera 117 als auch Spektrometer 120 anzeigen, dass der jeweilige Messvorgang abgeschlossen ist. Ein zweites Ausgangssignal 133 wird erzeugt, wenn sowohl RGB-Kamera 117 als auch Spektrometer 120 anzeigen, dass sie bereit für den nächsten Messvorgang sind.

Die Untereinheit 130 ist dazu eingerichtet, auf das erste Ausgangssignal 132 hin, d.h. jeweils unmittelbar nach Abschluss der letzten Messung, eine Wechseleinrichtung 134 anzusteuern, die das Messobjekt 110 wechselt. Hierzu wird das aktuelle Messobjekt 110 entfernt und in eine schematisch angedeutete Produktionslinie 135 zurückgegeben. Das jeweils nächste Messobjekt 110 wird der Produktionslinie 135 entnommen und auf dem Messplatz zur Farbmessvorrichtung 112 positioniert. Weiter ist die Untereinheit 130 dazu eingerichtet, nach vollzogenem Wechsel des Messobjektes 110 und auf das zweite Ausgangssignal 133 hin, d.h. bei Messbereitschaft von RGB-Kamera 117 und Spektrometer 120, das Eingangssignal 131 an die Untereinheit 129 abzugeben, so dass der nächste Messvorgang über die Triggereingänge 122, 123 der RGB-Kamera 117 bzw. des Spektrometers gestartet wird. Gleichzeitig aktiviert die Untereinheit 130 die Lichtabgabe des Messobjektes 110 während der gewünschten Messzeit.

Die Steuereinheit 128 kann durch einfache Logikbausteine (oder ein FPGA) realisiert werden. Die Signallaufzeiten sind entsprechend definiert. Der Kostenaufwand ist gering.

Die Steuereinheit 128 in Kombination mit den Triggereingängen 122, 123 und Signalausgängen 124-127 ermöglicht somit die Implementierung einer automatisierten Messsequenz, ohne dass die Datenverarbeitungseinheit 118 in die Steuerung involviert ist. Die Verweilzeit des Messobjektes 110 am Messplatz lässt sich damit minimieren, ohne dass Fehler aufgrund von schwankenden Befehlslaufzeiten in der Software der Datenverarbeitungseinheit 118 zu befürchten sind. Außerdem ist eine präzise zeitliche Synchronisierung der Messung per RGB-Kamera 117 und Spektrometer 120 sichergestellt.

## Patentansprüche

1. Bildgebende Lichtmessvorrichtung
mit einem Bildsensor (117) und einem optischen, nichtbildgebenden Spektrometer (120), wobei der Bildsensor (117) und das Spektrometer (120) dazu eingerichtet sind, von einem Messobjekt (110) emittiertes Licht zu empfangen, und mit einer Datenverarbeitungseinheit (118), die mit dem Bildsensor (117) und dem Spektrometer (120) verbunden ist und die von dem Bildsensor (117) und dem Spektrometer (120) ausgegebenen Messsignale verarbeitet,
wobei der Bildsensor (117) und das Spektrometer (120) jeweils einen Triggereingang (122, 123) aufweisen, wobei ein an dem Triggereingang (122, 123) anliegendes Triggersignal einen Messvorgang auslöst,
**dadurch gekennzeichnet, dass**
der Bildsensor (117) und das Spektrometer (120) jeweils mindestens einen Signalausgang (124-127) aufweisen und dazu eingerichtet sind, über den Signalausgang (124-127) ein von ihrem jeweiligen Betriebszustand abhängiges Signal auszugeben,
wobei die bildgebende Lichtmessvorrichtung eine von der Datenverarbeitungseinheit (118) unabhängige Steuereinheit (128) umfasst, die mit den Triggereingängen (122, 123) des Bildsensors (117) und des Spektrometers (120) verbunden ist,
wobei die Steuereinheit (128) mit den Signalausgängen (124-127) des Bildsensors (117) und des Spektrometers (120) verbunden ist und
wobei die Steuereinheit (128) eingerichtet ist, den Bildsensor (117) und das Spektrometer (120) über die Triggereingänge (122, 123) anzusteuern, und zwar in Abhängigkeit von den über die Signalausgänge (124-127) des Bildsensors (117) und des Spektrometers (120) ausgegebenen Signalen.

2. Lichtmessvorrichtung nach Anspruch 1, **dadurch gekennzeichnet, dass** der Bildsensor (117) und/oder das Spektrometer (120) jeweils dazu eingerichtet sind, nach Empfang des Triggersignals ein Signal über den Signalausgang (124-127) auszugeben.

3. Lichtmessvorrichtung nach Anspruch 1 oder 2, **dadurch gekennzeichnet, dass** der Bildsensor (117) und/oder das Spektrometer (120) jeweils dazu eingerichtet sind, während des laufenden Messvorgangs ein Signal über den Signalausgang (124-127) auszugeben.

4. Lichtmessvorrichtung nach einem der Ansprüche 2 bis 3, **dadurch gekennzeichnet, dass** der Bildsensor (117) und/oder das Spektrometer (120) jeweils dazu eingerichtet sind, nach Abschluss des Messvorgangs und vorzugsweise noch vor Abschluss der Übertragung der Messsignale an die Datenverarbeitungseinheit (118) ein Signal über den Signalausgang (124-127) auszugeben.

5. Lichtmessvorrichtung nach einem der Ansprüche 2 bis 4, **dadurch gekennzeichnet, dass** der Bildsensor (117) und/oder das Spektrometer (120) jeweils dazu eingerichtet sind, bei Bereitschaft zur Messung ein Signal über den Signalausgang (124-127) auszugeben.

6. Lichtmessvorrichtung nach einem der Ansprüche 1 bis 5, **dadurch gekennzeichnet, dass** das Triggersignal jeweils eine Integrationszeit des Bildsensors (117) und/oder des Spektrometers (120) steuert.

7. Lichtmessvorrichtung nach einem der vorgenannten Ansprüche, **dadurch gekennzeichnet, dass** die Steuereinheit (128) dazu eingerichtet ist, wenigstens ein Peripherieelement der Lichtmessvorrichtung anzusteuern.

8. Lichtmessvorrichtung nach Anspruch 7, **dadurch gekennzeichnet, dass** das Peripherieelement aus der Gruppe
- Strahlablenkungsmittel zur Ablenkung des von dem Messobjekt (110) emittierten Lichts auf den Bildsensor (117) oder das Spektrometer (120),
- optisches Filterrad, das dem Bildsensor (117) oder dem Spektrometer (120) vorgeschaltet ist,
- Polarisator, der dem Bildsensor (117) oder dem Spektrometer (120) vorgeschaltet ist, oder
- Positionierungseinrichtung zur Positionierung des Messobjektes (110) relativ zum Bildsensor (117) und zum Spektrometer (120) ist.

9. Lichtmessvorrichtung nach einem der vorgenannten Ansprüche, **dadurch gekennzeichnet, dass** die Steuereinheit (128) eine Wechseleinrichtung (134) zum automatisierten Wechseln des Messobjektes (110) ansteuert.

10. Lichtmessvorrichtung nach einem der vorgenannten Ansprüche, **dadurch gekennzeichnet, dass** die Steuereinheit (128) dazu eingerichtet ist, von dem Messobjekt (110) umfasste elektrische Lichtquellen anzusteuern.

11. Lichtmessvorrichtung nach einem der Ansprüche 1 bis 10, **dadurch gekennzeichnet, dass** die Datenverarbeitungseinheit (118) dazu eingerichtet ist, die von dem Bildsensor (117) und dem Spektrometer (120) ausgegebenen Messsignale in radio- und/oder photometrische Größenumzurechnen.

## Claims

1. Imaging light measuring device, comprising an image sensor (117) and an optical, non-imaging spectrometer (120), wherein the image sensor (117) and the spectrometer (120) are configured to receive light emitted by a measurement object (110), and a data processing unit (118) which is connected to the image sensor (117) and the spectrometer (120) and processes the measurement signals output by the image sensor (117) and the spectrometer (120),
wherein the image sensor (117) and the spectrometer (120) each comprise a trigger input (122, 123), wherein a trigger signal applied to the trigger input (122, 123) triggers a measurement process,
**characterized in that**
the image sensor (117) and the spectrometer (120) each comprise at least one signal output (124-127) and are configured to output a signal dependent on their respective operating state via the signal output (124-127),
wherein the imaging light measuring device comprises a control unit (128) independent of the data processing unit (118) and connected to the trigger inputs (122, 123) of the image sensor (117) and the spectrometer (120), wherein the control unit (128) is connected to the signal outputs (124-127) of the image sensor (117) and the spectrometer (120), and
wherein the control unit (128) is configured to control the image sensor (117) and the spectrometer (120) via the trigger inputs (122, 123) depending on the signals output via the signal outputs (124-127) of the image sensor (117) and the spectrometer (120).

2. Light measuring device according to claim 1, **characterized in that** the image sensor (117) and/or the spectrometer (120) are each configured to output a signal via the signal output (124-127) after receiving the trigger signal.

3. Light measuring device according to claim 1 or 2, **characterized in that** the image sensor (117) and/or the spectrometer (120) are each configured to output a signal via the signal output (124-127) during the ongoing measuring process.

4. Light measuring device according to any one of claims 2 to 3, **characterized in that** the image sensor (117) and/or the spectrometer (120) are each configured to output a signal via the signal output (124-127) after completion of the measurement process and preferably before completion of the transmission of the measurement signals to the data processing unit (118).

5. Light measuring device according to any one of claims 2 to 4, **characterized in that** the image sensor (117) and/or the spectrometer (120) are each configured to output a signal via the signal output (124-127) when ready for measurement.

6. Light measuring device according to any one of claims 1 to 5, **characterized in that** the trigger signal controls a respective integration time of the image sensor (117) and/or the spectrometer (120).

7. Light measuring device according to any one of the preceding claims, **characterized in that** the control unit (128) is configured to control at least one peripheral element of the light measuring device.

8. Light measuring device according to claim 7, **characterized in that** the peripheral element is from the group beam
- deflection means for deflecting the light emitted by the measured object (110) onto the image sensor (117) or the spectrometer (120),
- optical filter wheel which is connected upstream of the image sensor (117) or the spectrometer (120),
- polarizer which is connected upstream of the image sensor (117) or the spectrometer (120), or
- positioning device for positioning the measurement object (110) relative to the image sensor (117) and the spectrometer (120).

9. Light measuring device according to any one of the preceding claims, **characterized in that** the control unit (128) controls a changeover device (134) for automatically changing the measuring object (110).

10. Light measuring device according to any one of the preceding claims, **characterized in that** the control unit (128) is configured to control electrical light sources comprised by the measurement object (110).

11. Light measuring device according to any one of claims 1 to 10, **characterized in that** the data processing unit (118) is configured to convert the measurement signals output by the image sensor (117) and the spectrometer (120) into radio- and/or photometric quantities.

## Revendications

1. Dispositif de mesure de lumière d'imagerie
comportant un capteur d'image (117) et un spectromètre (120) optique ne produisant pas d'image, le capteur d'image (117) et le spectromètre (120) étant configurés pour recevoir de la lumière émise par un objet de mesure (110), et comportant une unité de traitement de données (118), qui est reliée au capteur d'image (117) et au spectromètre (120) et qui traite des signaux de mesure délivrés par le capteur d'image (117) et le spectromètre (120),
dans lequel le capteur d'image (117) et le spectromètre (120) présentent chacun une entrée de déclenchement (122, 123), un signal de déclenchement appliqué à l'entrée de déclenchement (122, 123) déclenchant un processus de mesure,
**caractérisé en ce que**
le capteur d'image (117) et le spectromètre (120) présentent chacun au moins une sortie de signal (124-127) et sont chacun configurés pour délivrer un signal dépendant de leur état respectif par le biais de la sortie de signal (124-127),
dans lequel le dispositif de mesure de lumière d'imagerie comprend une unité de commande (128) indépendante de l'unité de traitement de données (118) et reliée aux entrées de déclenchement (122, 123) du capteur d'image (117) et du spectromètre (120),
dans lequel l'unité de commande (128) est reliée aux sorties de signal (124-127) du capteur d'image (117) et du spectromètre (120) et
dans lequel l'unité de commande (128) est configurée pour activer le capteur d'image (117) et le spectromètre (120) par le biais des entrées de déclenchement (122, 123), à savoir en fonction des signaux délivrés par le biais des sorties de signal (124-127) du capteur d'image (117) et du spectromètre (120).

2. Dispositif de mesure de lumière selon la revendication 1, **caractérisé en ce que** le capteur d'image (117) et/ou le spectromètre (120) sont chacun configurés pour délivrer un signal par le biais de la sortie de signal (124-127) après la réception du signal de déclenchement.

3. Dispositif de mesure de lumière selon la revendication 1 ou 2, **caractérisé en ce que** le capteur d'image (117) et/ou le spectromètre (120) sont chacun configurés pour délivrer un signal par le biais de la sortie de signal (124-127) pendant le processus de mesure en cours.

4. Dispositif de mesure de lumière selon l'une des revendications 2 à 3, **caractérisé en ce que** le capteur d'image (117) et/ou le spectromètre (120) sont chacun configurés pour délivrer un signal par le biais de la sortie de signal (124-127) après la fin du processus de mesure et de préférence avant la fin de la transmission des signaux de mesure à l'unité de traitement de données (118).

5. Dispositif de mesure de lumière selon l'une des revendications 2 à 4, **caractérisé en ce que** le capteur d'image (117) et/ou le spectromètre (120) sont chacun configurés pour délivrer un signal par le biais de la sortie de signal (124-127) en présence d'un état prêt à la mesure.

6. Dispositif de mesure de lumière selon l'une des revendications 1 à 5, **caractérisé en ce que** le signal de déclenchement commande respectivement un temps d'intégration du capteur d'image (117) et/ou du spectromètre (120).

7. Dispositif de mesure de lumière selon l'une des revendications précédentes, **caractérisé en ce que** l'unité de commande (128) est configurée pour activer au moins un élément périphérique du dispositif de mesure de lumière.

8. Dispositif de mesure de lumière selon la revendication 7, **caractérisé en ce que** l'élément périphérique fait partie du groupe
- moyens de déflexion de faisceau destinés à défléchir la lumière émise par l'objet de mesure (110) sur le capteur d'image (117) ou le spectromètre (120),
- roue à filtres optiques, qui est montée en amont du capteur d'image (117) ou du spectromètre (120),
- polariseur, qui est monté en amont du capteur d'image (117) ou du spectromètre (120), ou
- système de positionnement destiné au positionnement de l'objet de mesure (110) par rapport au capteur d'image (117) et au spectromètre (120).

9. Dispositif de mesure de lumière selon l'une des revendications précédentes, **caractérisé en ce que** l'unité de commande (128) active un système de changement (134) destiné au changement automatique de l'objet de mesure (110).

10. Dispositif de mesure de lumière selon l'une des revendications précédentes, **caractérisé en ce que** l'unité de commande (128) est configurée pour activer des sources de lumière électriques appartenant à l'objet de mesure (110).

11. Dispositif de mesure de lumière selon l'une des revendications 1 à 10, **caractérisé en ce que** l'unité de traitement de données (118) est configurée pour convertir les signaux de mesure délivrés par le capteur d'image (117) et le spectromètre (120) en grandeurs radiométriques ou photométriques.
